# EUROPÄISCHE PATENTSCHRIFT

(11) **EP 1 722 435 B1**
(45) Veröffentlichungstag und Bekanntmachung des Hinweises auf die Patenterteilung: **16.05.2012**
(21) Anmeldenummer: 06012104.3
(22) Anmeldetag: 19.12.2003
(51) Int. Cl.: H01M 8/10, C08J 5/18

(54) **Herstellungsverfahren für Polymermembran-Elektroden-Einheiten**
Method for the production of polymer membrane-electrode-assemblies
Procédé de fabrication de l'ensemble d'électrode à membrane polymère

(30) Priorität: 20.01.2003 DE 10301810
(43) Veröffentlichungstag der Anmeldung: 15.11.2006
(62) Teilanmeldung aus: 03815370.6
(73) Patentinhaber: elcomax membranes GmbH, 81737 München (DE)
(72) Erfinder: Melzner, Dieter, Dr., 37075 Göttingen (DE); Reiche, Annette, Dr., 37079 Göttingen (DE); Mähr, Ulrich, Dr., 14052 Berlin (DE); Kiel, Suzana, Dr., 37073 Göttingen (DE)
(74) Vertreter: Grättinger Möhring von Poschinger Patentanwälte Partnerschaft

(56) Entgegenhaltungen:
- EP-A- 0 827 228
- EP-A- 1 205 994
- WO-A-00/44816
- WO-A-00/56431
- WO-A-01/18894
- WO-A-01/64322
- US-A- 5 322 916
- WANG J.-T. ET AL: 'A H2/O2 FUEL CELL USING ACID DOPED POLYBENZIMIDAZOLE AS POLYMER ELECTROLYTE' ELECTROCHIMICA ACTA, ELSEVIER SCIENCE PUBLISHERS, BARKING, GB Bd. 41, Nr. 2, 01 Februar 1996, Seiten 193 - 197, XP000770320 ISSN: 0013-4686
- QINGFENG L. ET AL: 'PHOSPHORIC ACID DOPED POLYBENZIMIDAZOLE MEMBRANES: PHYSIOCHEMICAL CHARACTERIZATION AND FUEL CELL APPLICATIONS' JOURNAL OF APPLIED ELECTROCHEMISTRY, SPRINGER, DORDRECHT, NL Bd. 31, 01 Januar 2001, Seiten 773 - 779, XP008018028 ISSN: 0021-891X

## Beschreibung

Die vorliegende Erfindung betrifft ein Verfahren zur Herstellung einer Membran-Elektroden-Einheit (MEE) einer Polymerelektrolyt-Brennstoffzelle im Arbeitstemperaturbereich bis 250 °C..

Zur stationären und mobilen Stromgewinnung, z.B. für Straßenfahrzeuge, in der Raumfahrt, in Kraftwerken etc. werden in zunehmendem Maße Brennstoffzellen als mögliche Stromquelle untersucht und entwickelt. Eine Brennstoffzelle ist ein galvanisches Element, in dem chemische Energie direkt, d.h. nicht auf dem Umweg über thermische Energie, in elektrische Energie umgewandelt wird. Die Einzelzelle besteht dabei aus zwei invarianten Elektroden, zwischen denen sich ein invarianter Elektrolyt befindet. Die Brennstoffzelle liefert kontinuierlich Strom, wobei die zu oxidierende Substanz, d.h. der sogenannte Brennstoff, wie Wasserstoff, der durch Spaltung von Erdgas, Methanol, Hydrazin, Ammoniak etc. gewonnen wird, und das Oxidationsmittel, z.B. Sauerstoff, kontinuierlich zu- und die Oxidationsprodukte, z.B. Wasser, kontinuierlich abgeführt werden.

Mit Beginn des Einsatzes von polymeren Membranen als invarianter Feststoffelektrolyt richtete sich die Aufmerksamkeit auf protonenleitende Polymermembranen auf Basis perfluorierter Sulfonsäureeinheiten enthaltender Ionomere, wie z.B. Perfluoroalkyl-Sulfonsäure-Polymerelektrolyte. Eine derartige Polymermembran ist beispielsweise unter der Marke Nafion^{®} von Du Pont erhältlich. Solche Polymermembranen sind heterogene Systeme. Die hydrophilen und hydrophoben Polymerbausteine bilden eine Clusterstruktur, in die, als Voraussetzung für eine hohe Leitfähigkeit, Wasser eingelagert wird. Der Ladungstransport ist bei diesem heterogenen System an die flüssige, d.h. wässrige Phase gebunden. Die Tatsache, daß Wassermoleküle in diesen Protonenleitern als Protonencarrier fungieren, bedingt, daß die Wasserkonzentration in der Zelle konstant gehalten werden muß. Letzteres ist problematisch, da Wasser stets als Oxidationsprodukt bei der Reaktion erzeugt wird und daher kontrolliert abgeführt werden muß. Ebenfalls bedingt durch die Rolle der Wassermoleküle als Protonencarrier arbeiten die Brennstoffzellen bei Temperaturen unterhalb von 100°C, da bei Temperaturen von oberhalb von 100°C Wasser aus den Polymermembranen ausgetrieben wird. Dies würde zu einer Verminderung der Leitfähigkeit führen, weshalb die Polymermembranen auf einen Einsatz im Temperaturbereich unterhalb 100°C beschränkt sind (O. Savadogo et al., Journal of New Materials for Electrochemical Systems 1 (1998), S. 47-66). Ein weiteres Problem von Polymermembran-Brennstoffzellen auf Nafionbasis besteht darin, daß die verwendeten Katalysatoren im Temperaturbereich unterhalb 100°C besonders empfindlich auf Katalysatorgifte wie Kohlenmonoxid reagieren und generell wenig effektiv arbeiten.

In US-Patent Nr. 5 525 436 wird eine polymere Feststoffelektrolytmembran beschrieben, die ein protonenleitendes Polymer umfaßt, welches bis zu Temperaturen von 400°C thermisch stabil ist. Das protonenleitende Polymer kann dabei ein basisches Polymer sein, vorzugsweise Polybenzimidazol (PBI), welches mit einer starken Säure, vorzugsweise Schwefelsäure oder Phosphorsäure dotiert ist. Ein basisches Polymer, wie PBI führt bei Dotierung mit einer starken Säure, wie Schwefelsäure oder Phosphorsäure, zu einem Polymerelektrolyten, der ein Einphasensystem bildet, in welchem die Säure durch das Polymer komplexiert wird. Im Gegensatz zu den vorher beschriebenen heterogenen wasserhaltigen Systemen setzt der Ladungstransport nicht das Vorhandensein einer wässrigen Phase voraus.

Bei dem beispielsweise in US-Patent Nr. 5 525 436 beschriebenen einphasigen Elektrolytsystem werden (ebenfalls im Gegensatz zu den heterogenen Systemen) technisch relevante Leitfähigkeiten erst bei Temperaturen oberhalb von 100°C erreicht. Die Leitfähigkeit der Polymermembran ist abhängig von der darin enthaltenen Konzentration an Phosphorsäure, aber nicht nennenswert vom Wassergehalt. Polymermembranen auf der Basis von PBI sind gasdicht. Aus diesem Grund und bedingt durch die Komplexierung der Säure durch das Polymer ist der Säureaustrag aus der Zelle vernachlässigbar. Die Verwendung entsprechender Polymermembranen sollte einen Betrieb der Brennstoffzelle im Arbeitstemperaturbereich > 100°C < 200°C ermöglichen, mit Vorteilen im Bereich Katalysatoreffizienz und geringere Katalysatorempfindlichkeit und das Wassermanagement grundlegend vereinfachen. Aus diesen Gründen und wegen der hohen Oxidationsbeständigkeit des Polymeren werden mit Phosphorsäure dotierte PBI-Polymermembranen als Elektrolyt und Separator für Brennstoffzellen im Arbeitstemperaturbereich oberhalb von 100°C, beispielsweise für etwa 160°C entwickelt.

Die Phosphorsäure-dotierten PBI-Polymermembranen werden üblicherweise (siehe WO 01/18894 A2 oder WO 96/13874 A1) in einem mehrstufigen Verfahren hergestellt, wobei in der ersten Stufe das PBI in Dimethylacetamid (DMAc), welches 2% Lithiumchlorid (LiCl) enthält, gelöst und die Lösung durch Gießen oder Sprühen in die Form eines Films gebracht wird. Nach dem Trocknen des Films wird das LiCl mit Wasser aus dem Film extrahiert. Als Zwischenprodukt wird eine amorphe und flexible Polymermembran erhalten. Diese Polymermembran wird im nächsten Verfahrensschritt mit Schwefelsäure (H₂SO₄) bzw. vorzugsweise mit Phosphorsäure (H₃PO₄) dotiert. Dabei nimmt die Polymermembran ein Vielfaches ihres Eigengewichtes an Dotierungsmittel auf. Die resultierende dotierte Polymermembran ist teilkristallin, aufgrund des hohen Quellungsgrades mechanisch instabil und schwer zu handhaben. Der Kristallinitätsgrad und damit die mechanische Instabilität nimmt in Anwesenheit von Wasser, z.B. bei der Lagerung oder durch Wasser, welches bei dem Betrieb der Brennstoffzelle erzeugt wird, zu.

Ein anderer Weg zur Herstellung von mit Phosphorsäure dotierten PBI-Polymermembranen besteht darin, wie in WO 02/081547 A1 oder DE 10117686 A1 beschrieben, Lösungen aus geeigneten Monomeren bzw. Präpolymeren in Polyphosphorsäure herzustellen, diese durch geeignete Verfahren in Membranform zu bringen und durch Einwirkung von Temperaturen bis zu 300°C zu polymerisieren und im Anschluß unter Einwirkung von Luftfeuchtigkeit zu hydrolysieren.

Prinzipiell weisen die bisher zur Herstellung von Brennstoffzellen eingesetzten Polymermembranen einen hohen Gehalt an Dotierungsmittel auf. Wurde Phosphorsäure eingesetzt, so betrug das Verhältnis von Säure zu Monomereinheit, aus der das Polymer zusammengesetzt ist, üblicherweise mehr als 50 Gew.% H₃PO₄ (etwa 400 Mol%) (US Patent Nr. 5 525 436, Spalte 10: 470 Mol-%, entsprechend 55 Gew.%; WO 01/18894 Spalte 6: etwa 67 Gew.%). Noch höhere Phosphorsäuregehalte, bis zu 85 Gew,% können durch die filmbildende Polymerisation in Polyphosphorsäure erreicht werden (WO 02/081547 A1 oder DE 10117686 A1). Dies führt zu stark gequollenen Polymermembranen, die Verformungen aufweisen und deren mechanische Belastbarkeit zu wünschen übrig läßt, was ihre Verwendung in einer Brennstoffzelle erschwert, insbesondere in Bezug auf den Zellbau und die Langzeitstabilität.

Zur Verbesserung der mechanischen Eigenschaften wurde in WO 00/44816 A1 vorgeschlagen, die Polymermembran aus PBI mit Hilfe eines Vernetzungsmittels zu vernetzen. Damit läßt sich die mit der Dotierung verbundene Verminderung der mechanischen Stabilität einschränken und die Verarbeitbarkeit der Polymermembran verbessern. Allerdings ist die mechanische Festigkeit für praktische Anwendung in Brennstoffzellen noch immer unzureichend, da auch bei diesen Polymermembranen ein Verhältnis von H₃PO₄ zur PBI-Wiederholungseinheit von über 6 (entsprechend etwa 65 Gew.% H₃PO₄) gewählt wurde (WO 00/44816 A1, Tabelle 2, Seite 16), um eine ausreichende Leitfähigkeit der Polymermembran sicherzustellen. Sämtliche der in der Literatur beschriebenen Testergebnisse von Membran-Elektroden-Einheiten beziehen sich daher auf die Untersuchung kleiner Zellen, bei denen die geringe mechanische Stabilität der Polymermembran nicht so stark ins Gewicht fällt und die eine aktive Fläche von weniger als 40 cm² aufweisen (WO 00/30202 A1, WO 01/18894 A2 sowie Untersuchungen in Mikrobrennstoffzellen: WO 96/13872 A1).

Membran-Elektroden-Einheiten für Polymerelektrolyt-Brennstoffzellen für den Arbeitstemperaturbereich zwischen 100 und 200 °C mit Polymerelektrolyt-Polymermembranen auf der Basis des Systems PBI-H₃PO₄ enthalten üblicherweise zwei Gasverteilungselektroden, die durch die Polymermembran separiert werden.

Die in der Literatur für diese Anwendung beschriebenen Gasverteilungselektroden sind analog aufgebaut zu Elektroden für MEEs mit Elektrolytmembranen auf der Basis von Natron, wobei auf Nafion als Elektrodenbestandteil verzichtet wird. Die protonenleitende Anbindung zwischen Elektrode und Elektrolyt wird in der Regel durch Phosphorsäurc gewährleistet. Dazu werden die Elektroden vor dem Zusammenbau der Zelle mit Phosphorsäure imprägniert (WO 01/18894 A2). US-Patent Nr. 5 599 639 geht davon aus, dass Phosphorsäure aus der Polymermembran in die Elektroden diffundiert.

Bei Arbeitstemperaturen >> 100°C ist der Phosphorsäureaustrag aus der Zelle minimal. Eine zusätzliche Einschränkung des Phosphorsäureaustrages aus der Zelle kann erreicht werden, wenn, wie in WO 01/18894 A2 vorgeschlagen, PBI als polymerer Binder für die Elektroden verwendet wird, was aber auf Grund der Eigenschaft von PBI, dichte Filme zu bilden, nicht unproblematisch ist.

Aufgabe der vorliegenden Erfindung ist es, ein Verfahren Zur Herstellung eine Membran-Elektroden-Einheit (MEE) einer Polymerelektrolyt-Brennstoffzelle hoher Leistung im Arbeitstemperaturbereich oberhalb 50 °C zur Verfügung zu stellen, mit dem die oben genannten Nachteile überwunden werden und das auf einfache Weise realisiert werden kann.

Die Aufgabe werden durch das in dem unabhängigen Anspruch 1 definierte Verfahren gelöst. Vorteilhafte Ausgestaltungen der Erfindung sind in den Unteransprüchen definiert.

Die Polymermembran für eine MEE umfaßt ein basisches Polymer, welches durch Dotierung mit einem Dotierungsmittel protonenleitend wird und in diesem Zustand eine technisch relevante Leitfähigkeit aufweist. Das basische Polymer ist ausgewählt aus der Gruppe der Polybenzimidazole, Polypyridine, Polypyrimidine, Polyimidazole, Polybenzthiazole, Polybenzoxazole, Polyoxadiazole, Polychinoxaline, Polythiadiazole, Poly(tetrazapyrene) oder einem Copolymer oder einem Gemisch aus zwei oder mehreren Vertretern dieser Gruppe. In einer bevorzugten Ausführungsform der Erfindung ist das basische Polymer Polybenzimidazol (PBI).

Bei den Elektroden für eine MEE handelt es sich um poröse Gasverteilungselektroden mit einer der Polymermembran zugewandten, den Katalysator enthaltenden Schicht, welche auf eine Gasverteilungsschicht aus einer Kohlenstoffmatrix aufgebracht ist. Die Gasverteilungselektroden sind mit dem Dotierungsmittel derart beladen, dass sie ein Dotierungsmittelreservoir für die Polymermembran darstellen, welche zum Zeitpunkt des Zusammenbaues der MEE nicht dotiert zu sein braucht. Gemäß der Erfindung beträgt der Gehalt an Dotierungsmittel in den Gasverteilungselektroden 60 bis 120 % der Masse des basischen Polymers in der Polymermembran.

In einer weiteren bevorzugten Ausführungsform der Erfindung ist das Dotierungsmittel eine starke mehrbasige anorganische Säure. Beispiele sind Phosphor(V)säure und Schwefel(VI)säure, wobei Phosphor(V)säure besonders bevorzugt ist. Die Verwendung dieser freien Säuren als Dotierungsmittel ist bei Betriebstemperaturen der Brennstoffzelle von mehr als 100°C bevorzugt.

Die Menge an Phosphorsäure, die von der Polymermembran aufgenommen werden kann, ist abhängig von Temperatur und Dotierungszeit, während der Prozeß bei niedrigen Temperaturen sehr langsam abläuft und nur zu Dotierungsgraden von bis zu 50 Gew.% führt, können bei Temperaturen oberhalb 100°C sehr schnell große Mengen an H₃PO₄ in die Polymermembran eingetragen werden. Überraschenderweise wurde gefunden, dass für Temperaturen, bei denen Polymerelektrolyt-Brennstoffzellen vorzugsweise betrieben werden sollen, nämlich bei Temperaturen zwischen 100 und 200°C, dass die hochporösen Gasverteilungselektroden als Reservoir für das Dotierungsmittel dienen, welches unter Betriebsbedingungen der Polymerelektrolyt-Brennstoffzellen in ausreichendem Maße Dotierungsmittel an die Polymermembran abgibt. Das hat den Vorteil, daß zum Bau der Membran-Elektroden-Einheit sogar nichtdotierte Polymermembranen verwendet werden können, die mechanisch hoch belastbar sind. Unter Betriebsbedingungen erfolgt eine Umverteilung des Dotierungsmittels aus den Gasverteilungselektroden in die Polymermembran, wodurch die Gasverteilungselektroden protonenleitend an die Polymermembran angebunden werden, und die dotierte Polymermembran erreicht Werte für die Leitfähigkeit ≥ 0,1 S/m (>25°C) . MEE, die erfindungsgemäß hergestellt werden, sind in Polymerbrennstoffzellen bis zu einer Arbeitstemperatur von 250 °C einsetzbar.

Es wurde gefunden, daß die Polymermembran während der Dotierung in der MEE unter Betriebsbedingungen erweicht und so ein guter Kontakt zwischen Gasverteilungselektroden und protonenleitfähiger Polymermembran hergestellt wird. Nachfolgende Kristallisationsprozesse in der Polymermembran in Gegenwart von Dotierungsmittel stabilisieren den Gasverteilungselektroden- Polymermembran-Gasverteilungselektroden-Sandwich mechanisch und sorgen für einen festen physikalischen Zusammenhalt. Komplexbildung zwischen basischem Polymer und Dotierungsmittel, die Gasundurchlässigkeit einer intakten Polymermembran sowie Kapillarkräfte in den Gasverteilungselektroden bewirken, daß das Dotierungsmittel unter Betriebsbedingungen (T>> 100°C, p> 1 bar) in der MEE verbleibt und durch entstehendes Produktwasser nicht aus der Zelle ausgetragen wird.

Falls der Austausch von Dotierungsmittel in der Polymerelektrolyt-Brennstoffzelle und die dadurch bedingten Quellungsvorgänge in der Polymermembran Spannungen an der Kontaktfläche Elektrode-Elektrolyt (protonenleitende Polymermembran) bewirken, die dazu führen, daß die Polymermembran reißt, kann gemäß der Erfindung zur Verhinderung eine weichgemachte Polymermembran, z.B. eine Polymermembran die Phosphorsäureester enthält, verwendet werden. Derartige weichgemachte Polymermembranen können bis zu 40 Gew. % an Weichmacher enthalten. In diesem Falle laufen die Equilibrierungsvorgänge bei Herstellung der MEE und bei Inbetriebnahme der Polymerelektrolyt-Brennstoffzelle deutlich schneller ab. Außerdem ist erfindungsgemäß vorgesehen, die Polymermembran zu vernetzen, dadurch wird die mechanische Stabilität der Polymermembran heraufgesetzt, zudem kann der durch Quellung maximal erreichbare Dotierungsgrad der Polymermembran auf das zum Erreichen der Leitfähigkeit notwendige Maß eingeschränkt werden, was sich wiederum günstig auf die Lebensdau er der Polymerelektrolyt-Brennstoffzelle auswirkt. Ein weiterer Vorteil der Erfindung besteht darin, den Gehalt an Dotierungsmittel so zu optimieren, daß nur soviel davon vorhanden ist, wie für die Anbindung von Gasverteilungselektrode und Polymermembran und für die Leitfähigkeit der Polymermembran notwendig ist, was die Lebensdauer der Polymerelektrolyt-Brennstoffzelle ebenfalls erhöht und die Effizienz der ablaufenden elektrochemischen Prozesse verbessert.

Ein weiterer Vorteil der Erfindung besteht darin, dass im Fall der Verwendung einer nichtdotierten Polymermembran, oder auch im Fall der Verwendung einer Polymermembran enthaltend einen Weichmacher auf der Basis eines Esters einer mehrbasigen anorganischen Säure, das Verfahren zu Herstellung der Polymermembranen erheblich verkürzt wird, da die Polymermembranen durch kontinuierliche Maschinenziehung in der Anwendungsform ohne weitere Nacharbeiten hergestellt werden können.

Die Polymermembran für die MEE wird durch technische Maschinenziehung einer Polymerlösung hergestellt, welche ein oder mehrere basische Polymere umfassen kann. Darunter werden Polymere verstanden, die aufgrund ihrer Basizität in der Lage sind, Dotierungsmittel, wie im folgenden definiert, zu binden. Bevorzugte basische Polymere schließen Polybenzimidazol, Polypyridin, Polypyrimidin, Polyimidazole, Polybenzdiazole, Polybenzoxazole, Polyoxadiazole, Polychinoxaline, Polythiadiazole und Poly(tetrazapyrene) oder Copolymere oder Gemische aus zwei oder mehreren der vorgenannten Vertreter ein. Besonders bevorzugt sind erfindungsgemäß basische Polymere der nachstehend angegebenen allgemeinen Formel:

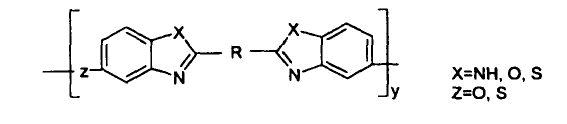

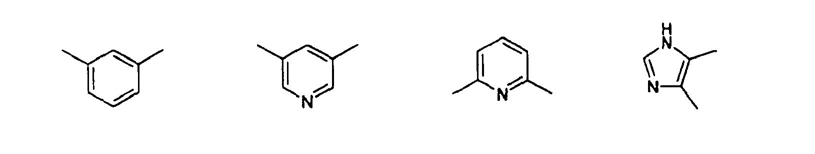

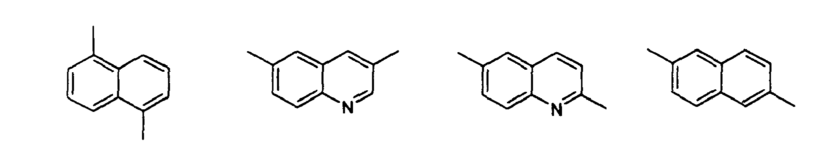

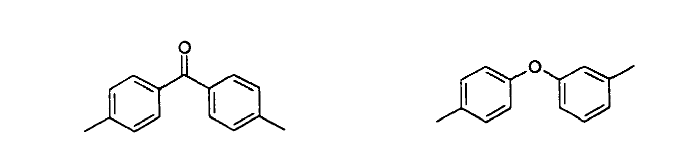

R hat bevorzugt die Bedeutung einer der oben aufgeführten Gruppen oder die einer zweiwertigen Verknüpfungsgruppe, wie eine lineare oder verzweigte, substituierte oder unsubstituierte, gegebenenfalls perfluorierte -CF₂-CF₂-Kohlenwasserstoffgruppe .

X kann eine Aminogruppe aber auch ein Sauerstoffatom oder ein Schwefelatom sein, Z ein Sauerstoff oder Schwefelatom.

Außerdem kann das basische Polymer sulfoniert oder phosphoniert sein, wie in dem US-Patent Nr. 5 599 639 beschrieben wird, wobei die Phosphonierung bevorzugt ist. Dies kann sinnvoll sein, um dem Austrag von Dotierungsmittel aus der MEE entgegenzuwirken. Das in Form eines oder mehrerer Flächengebilde vorliegende Basismaterial kann außer dem basischen Polymer oder den basischen Polymeren weitere Stoffe, wie Keramik, enthalten.

Bei dem basischen Polymer handelt es sich bevorzugt um Polybenzimidazol (PBI) der Formel (II)

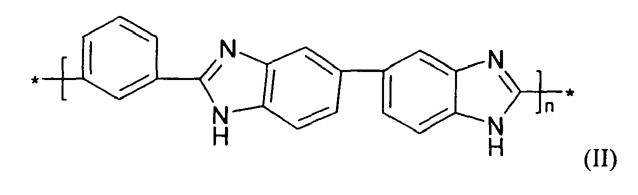

Als Lösungsmittel für die zur Polymermembranherstellung verwendete Lösung kommen alle Lösungsmittel in Frage, in denen sich das basische Polymer löst bzw. die Polymere lösen. Vorzugsweise ist das Lösungsmittel aus der Gruppe, umfassend N-Methylpyrrolidon (NMP), Dimethylformamid (DMF), Dimethylsulfoxid (DMSO), Dimethylacetamid (DMAc) und Gemischen davon ausgewählt, wobei Dimethylacetamid besonders bevorzugt ist.

Die Konzentration des Polymers bzw. der Polymere in Lösung liegt im Bereich von 10 Gew.% bis 50 Gew.%, bezogen auf das Gewicht der fertigen, zur Polymermembranherstellung verwendeten Lösung. Die Konzentration ist dabei abhängig von der Art des Polymers bzw. der Polymere und deren Molmasse. Die zur Herstellung der Polymermembran verwendete Lösung weist in der Regel ausgezeichnete Filmbildungseigenschaften auf. Diese gestatten ein problemloses sogenanntes "Maschinenziehen" der Lösung, wodurch eine sehr gleichmäßige Polymermembran erhalten werden kann.

Um die mechanische Stabilität der Polymermembran zu erhöhen und die Aufnahmefähigkeit der Polymermembran für das Dotierungsmittel zu begrenzen, kann es sinnvoll sein. die Polymermembran bei der Herstellung durch technische Polymermembranziehung zu vernetzen.

Die Vernetzung der Polymermembran geschieht vorzugsweise mit einem Vemetzungsmittel, welches bereits der Polymermembrangießlösung zugegeben wird. Hierfür kommen alle mindestens zwei funktionelle Gruppen aufweisenden Verbindungen in Frage, welche mit dem verwendeten Polymer bzw. Polymeren unter Ausbildung kovalenter Bindungen reagieren können. Gemäß einer bevorzugten Ausführungsform der Erfindung weist das eingesetzte Vernetzungsmittel Epoxy- und/oder Isocyanatgruppen auf, wie die in WO 00/44816 A1 beschriebenen. Bevorzugt sind dabei Verbindungen mit mindestens zwei Epoxidgruppen im Molekül. Besonders bevorzugt ist die Verwendung von 1,4-Butandioldiglycidylether (III) als Vernetzungsmittel.

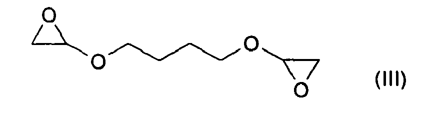

Die zur Vernetzung der Polymermembran notwendige Vernetzermenge richtet sich nach dem gewünschten Vernetzungsgrad und ist abhängig von der Molmasse des verwendeten basischen Polymeren und der Reaktionstemperatur, vorzugsweise werden der Reaktionslösung 2 bis 20 Mol% bezogen auf die Wiederholungseinheit des Polymeren zugesetzt.

In einer bevorzugten Ausführungsform werden Polymermembranen eingesetzt, die während des Schrittes der Polymermembranherstellung durch technische Maschinenziehung gleichzeitig vernetzt und weichgemacht wurden.

In diesem Fall werden Weichmacher verwendet, die ein Reaktionsprodukt einer mindestens zweibasigen, in der Regel anorganischen Säure mit einer organischen Verbindung oder das Kondensationsprodukt des vorgenannten Reaktionsproduktes mit einer mehrbasigen Säure umfassen. Es handelt sich hierbei um mehrbasige, mindestens zweibasige Säuren, die ein- oder mehrfach mit einer organischen Verbindung Ester-analog zu Estern, Säureamiden oder Säureanhydriden umgesetzt sind, wobei in der entstehenden Verbindung ein acides Proton verbleibt. Die organische Verbindung, welche mit der Säure umgesetzt wird, ist ausgewählt aus der Gruppe, umfassend lineare oder verzweigte, gegebenenfalls substituierte aliphatische Alkohole mit 5 bis 20, vorzugsweise mit 6 bis 16, mehr bevorzugt mit 7 bis 12, am meisten bevorzugt mit 8 bis 10 Kohlenstoffatomen: gegebenenfalls substituierte aromatische Alkohole; lineare oder verzweigte, gegebenenfalls substituierte aliphatische Amine mit 5 bis 20, vorzugsweise mit 6 bis 16, mehr bevorzugt mit 7 bis 12, am meisten bevorzugt mit 8 bis 10 Kohlenstoffatomen und aromatische Amine. Unter den organischen Verbindungen ist 2-Ethylhexanol und Phenol für die Umsetzung mit der Säure, vorzugsweise Phosphorsäure, besonders bevorzugt. Die Umsetzung der mindestens zweibasigen Säure mit der organischen Verbindung ist so durchzuführen, daß eine acide Gruppe, d.h. eine Hydroxylgruppe der Säure übrigbleibt. Dabei können bei einer dreibasigen Säure, wie Phosphorsäure, zwei acide OH-Gruppen mit einer bifunktionalen organischen Verbindung, beispielsweise einem Diol verbrückt, d.h. unter Ausbildung eines Ringes beispielsweise verestert sein. Gemäß einer bevorzugten Ausführungsform des erfindungsgemäßen Verfahrens wird als Weichmacher ein Reaktionsprodukt einer mindestens zweibasigen Säure mit einer organischen Verbindung eingesetzt. Unter den geeigneten Verbindungen sind Phosphorsäurediester, wie Di-(2-ethylhexyl)phosphorsäureester und Diphenylphosphorsäureester, bevorzugt, wobei Di-(2-ethylhexyl)phosphorsäureester besonders bevorzugt ist.

Vernetzung und Weichmachung können als Steuerparameter benutzt werden, um die Verteilung des Dotierungsmittels in der Membran-Elektroden-Einheit zu beeinflussen, zum Beispiel, um die Aufnahmefähigkeit der Polymermembran für das Dotierungsmittel zu begrenzen, aber gleichzeitig einen schnellen Austausch von Dotierungsmittel zwischen Elektrode und Polymermembran zu ermöglichen. Einfluß auf diese Parameter haben aber auch die Betriebstemperatur, die Polymermembrandicke, vorzugsweise im Bereich 20 bis 70 µm und die Konzentration des zur Elektrodenimprägnierung eingesetzten Dotierungsmittels (vorzugsweise Phosphorsäure).

Die Erfindung wird nun anhand der nachfolgenden Beispiele und der Figuren 1 bis 2 näher erläutert, welche die Erfindung aber in keiner Weise einschränken.
- Fig. 1: zeigt eine Polarisationskurve als Funktion der Spannung und der Stromdichte für eine nach Beispiel 6 hergestellte MEE und
- Fig. 2: zeigt eine Polarisationskurve als Funktion der Spannung und der Stromdichte für eine nach Beispiel 12 hergestellte MEE.

### Beispiel 1

### Herstellen einer Polymergießlösung

216 g PBI mit einer inhärenten Viskosität von 0,86 dl/g werden in 684 g DMAc durch dreistündiges Rühren im Druckreaktor bei 200°c aufgelöst. Die Lösung wird abgekühlt und über eine Sartopure^{®} PP2(P9) Filtercapsule mit einer Porengröße von 20 µm der Sartorius AG, Göttingen, filtriert und entgast. Die Lösung besitzt einen Feststoffgehalt von 24%.

### Beispiel 2

### Herstellen einer Polymermembran

Aus der Lösung entsprechend Beispiel 1 wird durch technische Maschinenziehung auf einer als Unterlage dienenden Polyesterfolie durch Verdunsten des Lösungsmittels bei 150°C eine Polymermembran von 40 µm Dicke hergestellt und von der Unterlage abgelöst. Zur vollständigen Entfernung des Lösungsmittels wird die Polymermembran anschließend bei einer Temperatur von 200°C 4 h nachgetrocknet.

### Beispiel 3

### Zug-Spannungsmessungen

Zur Beurteilung der mechanischen Stabilität wurden Zug-Spannungs-Messungen durchgeführt. Prüfkörper entsprechend Beispiel 2 mit einer Länge von 10 cm und einer Breite von 2 cm werden in einer Meßapparatur Z 2.5 der Firma Zwick GmbH & Co. eingespannt und mit einer Geschwindigkeit von 5 cm/min bei Raumtemperatur auseinandergezogen. Die Polymermembran reißt bei einer Bruchspannung von 150 N/mm² mit einer Dehnung von 7%.

### Beispiel 4

### Bestimmen des Vernetzungsgrades

Von den nach Beispiel 2 hergestellten Polymermembranen wird der Vernetzungsgrad mittels Extraktion bestimmt. Es wird ein Polymermembranstück von 7,5 x 7,5 cm Kantcnlänge ausgestanzt und in einen Rundkolben ohne Rührfisch gegeben. Es wird soviel DMAc in den Rundkolben zugegeben, bis das Polymermembranstück ganz mit Flüssigkeit bedeckt ist. Der Rundkolben wird mit Hilfe eines Ölbades auf 130°C erhitzt. Während des Erhitzens löst sich das Polymermembranstück noch vor Erreichen der gewünschten Temperatur vollkommen auf, da die Polymermembran nicht vernetzt ist.

### Beispiel 5 (nicht erfindungsgemäß)

### Herstellen einer Membran-Elektroden-Einheit

Zur Herstellung einer Membran-Elektroden-Einheit (MEE) wird eine in Beispiel 2 hergestellte Polymermembran in ca. 104 cm² große quadratische Stücke geschnitten. Kommerziell erhältliche ELAT-Elektroden mit 2,0 mg/cm² Pt-Belegung und einer Fläche von 50 cm² der Firma E-TEK werden im Vakuum mit konzentrierter Phosphorsäure bei Raumtemperatur imprägniert, so dass die Elektroden nach Trocknung bei 100°C mindestens 0,25 g H₃PO₄/cm³ Elektrodenvolumen enthalten und anschließend mit der erfindungsgemäßen Polymermembran in einer üblichen Anordnung in eine Testbrennstoffzelle der Firma Fuel Cell Technologies, Inc. eingebaut. Die Zelle wird mit einem Anpressdruck von 2 MPa verschlossen und im Anschluß daran bei 160°C unter Spülen mit Stickstoff 16 h konditioniert und dann abgekühlt.

### Beispiel 6 (nicht erfindungsgemäß)

### Bestimmen der Leistungsparameter der Membran-Elektroden-Einheit nach Beispiel 5

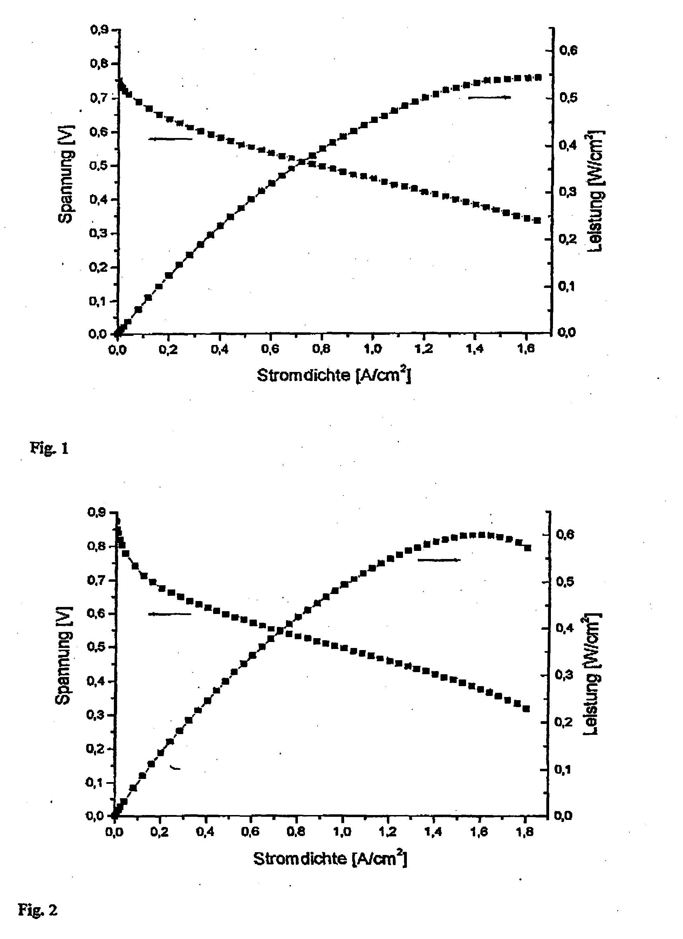

Die Zelle gemäß Beispiel 5 wird an einen handelsüblichen Brennstoffzellenteststand FCATS Advanced Screener der Firma Hydrogenics Inc. angeschlossen und in den Betriebszustand versetzt: T = 160°C, Gasdruck für Wasserstoff und Luft p = 3bar, Stöchiometrie für Luft von 2 und für Wasserstoff von 1,5. Unter diesen Bedingungen hat die Zelle eine Impedanz von ca. 10 mΩ, gemessen mit einem Impedanzspektrometer IM6 der Firma Zahner-elektrik GmbH & Co. KG. Abbildung 1 zeigt die Polarisationskurve als Funktion der Spannung und der Stromstärke. Die niedrige Ruhespannung kennzeichnet den Übergang von Wasserstoff auf die Kathodenseite bedingt durch einen Spannungsriß in der Polymermembran.

### Beispiel 7

### Herstellen einer Polymergießlösung enthaltend Vernetzer und Weichmacher.

180 g PBI mit einer inhärenten Viskosität von 0,86 dl/g werden in 720 g DMAc durch 3h Rühren im Druckreaktor bei 200°C aufgelöst. Die Lösung wird abgekühlt und über

eine Sartopure^{®}) PP2(P9) Filtercapsule mit einer Porengröße von 20 µm (Sartorius AG, Göttingen) filtriert. Die Lösung besitzt einen Feststoffgehalt von 20%.

Diese Lösung wird unter kräftigem Rühren mit 4 Gew.% 1,4-Butandioldiglycidylether, bezogen auf die Polymermenge, versetzt. Nach ca. 10 min werden 20 Gew.% Di-(2-ethylhexyl)-phosphat, bezogen auf die Polymermenge, langsam zugetropft. Die Lösung wird auf 100°C erwärmt und eine Stunde weiter gerührt, danach abgekühlt und entgast.

### Beispiel 8

### Herstellen einer Polymermembran

Aus der Lösung entsprechend Beispiel 7 wird durch technische Maschinenziehung auf einer als Unterlage dienenden Polyesterfolie durch Verdunsten des Lösungsmittels bei 150°C eine Polymermembran von 44 µm Dicke hergestellt und von der Unterlage abgelöst. Zur vollständigen Entfernung des Lösungsmittels wird die Polymermembran abschließend bei einer Temperatur von 200°C 4 h nachgetrocknet.

### Beispiel 9

### Zug-Spannungsmessungen

Zur Beurteilung der mechanischen Stabilität wurden Zug-Spannungs-Messungen durchgeführt. Prüfkörper entsprechend Beispiel 8 mit einer Länge von 10 cm und einer Breite von 2 cm werden in einer Meßapparatur Z 2.5 der Firma Zwick GmbH & Co. eingespannt und mit einer Geschwindigkeit von 5 cm/min bei Raumtemperatur auseinandergezogen. Die Polymermembran reißt bei einer Bruchspannung von 130 N/mm² bei einer Dehnung von 9%.

### Beispiel 10

### Bestimmen des Vernetzungsgrades

Von den nach Beispiel 8 hergestellten Polymermembranen wird der Vernetzungsgrad mittels Extraktion bestimmt. Es wird ein Polymermembranstück von 7.5 x 7,5 cm Kantenlänge ausgestanzt und in einen Rundkolben ohne Rührfisch gegeben. Es wird soviel DMAc in den Rundkolben zugegeben, bis das Polymermembranstück ganz mit Flüssigkeit bedeckt ist. Der Rundkolben wird mit Hilfe eines Ölbades auf 130°C erhitzt. Nach 1h Erhitzen bei 130°C und Abkühlen auf Raumtemperatur wird die Probe abfiltriert.

Die Probe wird über Nacht im Trockenschrank bei 200°C getrocknet. Danach wird die Probe zum Abkühlen auf Raumtemperatur in einen mit Trockenperlen gefüllten Exsikkator gestellt, der Exsikkator auf 100mbar evakuiert. Gravimetrisch wurde ermittelt, dass 92% des Ausgangsgewichtes stabil vernetzt sind.

### Beispiel 11 (erfindungsgemäß)

### Herstellen einer Membran-Elektroden-Einheit

Zur Herstellung einer Membran-Elektroden-Einheit (MEE) wird eine in Beispiel 8 hergestellte Polymermembran in ca. 104 cm² große quadratische Stücke geschnitten. Kommerziell erhältliche ELAT-Elektroden mit 2,0 mg/cm² Pt-Belegung und einer Fläche von 50 cm² der Firma E-TEK werden im Vakuum mit konzentrierter Phosphorsäure bei Raumtemperatur imprägniert, so dass die Elektroden nach Trocknung bei 100°C mindestens 0,25 g H₃PO₄/cm³ Elektrodenvolumen enthalten und anschließend mit der erfindungsgemäßen Polymermembran in einer üblichen Anordnung in eine Testbrennstoffzelle der Firma Fuel Cell Technologies, Inc. eingebaut. Die Zelle wird mit einem Anpressdruck von 2 MPa verschlossen und im Anschluß daran bei 160°C unter Spülen mit Stickstoff 16 h konditioniert und dann abgekühlt.

### Beispiel 12 (erfindungsgemäß)

### Bestimmen der Leistungsparameter der Membran-Elektroden-Einheit nach Beispiel 11

Die Zelle gemäß Beispiel 11 wird an einen handelsüblichen Brennstoffzellenteststand FCATS Advanced Screener der Firma Hydrogenics Inc. angeschlossen und in den Betriebszustand versetzt: T = 160°C, Gasdruck für Wasserstoff und Luft p = 3bar, Stöchiometrie für Luft von 2 und für Wasserstoff von 1,5. Unter diesen Bedingungen hat die Zelle eine Impedanz von ca. 10 mΩ, gemessen mit einem Impedanzspektrometer IM6 der Firma Zahner-elektrik GmbH & Co. KG. Abbildung 2 zeigt die Polarisationskurve als Funktion der Spannung und der Stromstärke. Mittels Wasserstoffmessung durch einen entsprechenden Sensor der Firma Dräger konnte kein Wasserstoff auf der Kathodenseite festgestellt werden.

## Patentansprüche

1. Verfahren zur Herstellung einer Membran-Elektroden-Einheit umfassend eine Polymermembran und zwei poröse Gasverteilungselektroden mit einer der Polymermembran zugewandten, den Katalysator enthaltenden Schicht, welche auf eine Gasverteilungsschicht aus einer Kohlenstoffmatrix aufgebracht ist, wobei die Polymermembran ein Polymer umfasst, das mindestens ein basisches Polymer enthält, wobei das basische Polymer ausgewählt ist aus der Gruppe der Polybenzimidazole, Polypyridine, Polypyrimidine, Polyimidazole, Polybenzthiazole, Polybenzoxazole, Polyoxadiazole, Polychinoxaline, Polythiadiazole, Poly(tetrazapyrene) oder einem Copolymer oder einem Gemisch aus zwei oder mehreren Vertretern dieser Gruppe,
**dadurch gekennzeichnet,**
**dass** die Polymermembran mit einem Vernetzer vernetzt und mit einem Weichmacher weichgemacht ist, dass die Gasverteilungselektroden mit einem Dotierungsmittel in einem Gehalt von 60-120% der Masse des basischen Polymers in der Polymermembran derart beladen werden, dass sie ein Dotierungsmittelreservoir für die Polymermembran darstellen, und dass die Polymermembran zum Zeitpunkt des Zzusammenbans der Membran-Elektroden-Einheit nich dotiert ist und eine mechanische Stabilität bei Raumtemperatur von mehr als 110 N/mm² Bruchspannung und einer Dehnung von mehr als 6 % aufweist.

2. Verfahren nach Anspruch 1 wobei die Polymermembran mit einem bifunktionellen Vernetzer vernetzt ist.

3. Verfahren nach Anspruch 2, wobei der Weichmacher ein Reaktionsprodukt einer mindestens zweibasigen Säure mit einer organischen Verbindung ist.

4. Verfahren nach Anspruch 3, wobei wobei die Polymermembran aus mit 1,4-Butandialdiglycidylether vernetztem und mit Di(2-ethylhexyl)-phosphat weichgemachtem PBI besteht.

## Claims

1. A method for producing a membrane electrode unit comprising a polymer membrane and two porous gas distribution electrodes with a layer which faces the polymer membrane and contains the catalyst and which is applied to a gas distribution layer made from a carbon matrix, wherein the polymer membrane comprises a polymer, which contains at least one basic polymer, wherein the basic polymer is chosen from the group of polybenzimidazoles, polypyridines, polypyrimidines, polyimidazoles, polybenzthiazoles, polybenzoxazoles, polyoxadiazoles, polychinoxalines, polythiadiazoles, poly(tetrazapyrenes) or a copolymer or a mixture of two or more representatives of this group,
**characterised in that**
the polymer membrane is wetted with a wetting agent and is softened with a softening agent, that the gas distribution electrodes are charged with a doping agent in a content of 60-120 % of the mass of the basic polymer in the polymer membrane, such that they represent a doping agent store for the polymer membrane and that the polymer membrane is not doped at the point in time when the membrane electrode unit is assembled and exhibits a mechanical stability of over 110 N/mm2 breaking stress and an elongation of over 6 % at room temperature.

2. The method according to claim 1, wherein the polymer membrane is wetted using a bi-functional wetting agent.

3. The method according to claim 2, wherein the softening agent is a reaction product of an at least dibasic acid with an organic compound.

4. The method according to claim 3, wherein the polymer membrane comprises a PBI wetted with 1,4-butanediol diglycidyl ether and softened with di(2-ethylhexyl)-phosphate.

## Revendications

1. Procédé de fabrication d'une unité membrane-électrode comprenant une membrane polymère et deux électrodes poreuses à diffusion gazeuse pourvues d'une couche faisant face à la membrane polymère et contenant le catalyseur, laquelle est appliquée sur une couche à diffusion gazeuse constituée d'une matrice en carbone, ladite membrane polymère comprenant un polymère contenant un polymère à caractère basique, ledit polymère à caractère basique étant choisi dans le groupe des polybenzimidazoles, des polypyridines, des polypyzimidines, des polyimidazoles, des polybenzthiazoles, des polybenzoxazoles, des polyoxadiazoles, des polyquinoxalines, des polythiadiazoles, des poly(tétrazapyrènes) ou parmi les mélanges de deux ou de plusieurs représentants de ce groupe,
**caractérisé en ce que**
ladite membrane polymère est réticulé à l'aide d'un agent de réticulation et rendu souple à l'aide d'un plastifiant, que les électrodes à diffusion gazeuse sont chargées avec un agent de dopage dont la teneur correspond à 60 à 120 % de la masse dudit polymère à caractère basique au sein de la membrane polymère, faisant en sorte qu'elles représentent un réservoir d'agent de dopage pour ladite membrane polymère, et que la membrane polymère n'est pas dopée au moment de l'assemblage de l'unité membrane-électrode et présente, à température ambiante, une résistance mécanique correspondant à une contrainte de rupture supérieure à 110 N/mm² et à un allongement supérieur à 6 %.

2. Procédé selon la revendication 1, ladite membrane polymère étant réticulée à l'aide d'un agent de réticulation bifonctionnel.

3. Procédé selon la revendication 2, ledit plastifiant étant le produit d'une réaction entre un acide à déprotonation au moins double et un composé organique.

4. Procédé selon la revendication 3, ladite membrane polymère étant constituée de PBI réticulé à l'aide de butanedial-1,4-diglycidyléther et rendu souple à l'aide de phosphate de di(2-éthylhexyle).
